Europäisches Patentamt

European Patent Office

Office européen des brevets

(19)

(11) Veröffentlichungsnummer: **0 154 224 B1**

# (12) EUROPÄISCHE PATENTSCHRIFT

(45) Veröffentlichungstag der Patentschrift: **24.04.91**

(21) Anmeldenummer: **85101599.0**

(22) Anmeldetag: **14.02.85**

(51) Int. Cl.⁵: **B60L 5/20**

(54) Schleifstück für Bahnstromabnehmer.

(30) Priorität: **17.02.84 DE 3405674**

(43) Veröffentlichungstag der Anmeldung:
**11.09.85 Patentblatt 85/37**

(45) Bekanntmachung des Hinweises auf die
Patenterteilung:
**24.04.91 Patentblatt 91/17**

(84) Benannte Vertragsstaaten:
**AT DE FR GB SE**

(56) Entgegenhaltungen:
**DE-A- 2 405 910**
**DE-A- 2 654 264**
**DE-B- 1 257 825**
**DE-C- 650 172**
**FR-A- 2 378 074**

(73) Patentinhaber: **Schunk Kohlenstofftechnik
GmbH
Rodheimer Strasse 59
W-6301 Heuchelheim(DE)**

(72) Erfinder: **Wiessler, Ulrich, Dr.
Unter dem Rotdorn 5
W-6330 Wetzlar(DE)**
Erfinder: **Arnold, Leonhard
Tulpenweg 11
W-6301 Pohlheim(DE)**
Erfinder: **Neuhaus, Kurt
Giessener Landstrasse 27
W-3554 Lohra-Kirchvers(DE)**

(74) Vertreter: **Sternagel, Hans-Günther, Dr. et al
Patentanwälte Dr. Michael Hann Dr. H.-G.
Sternagel Sander Aue 30
W-5060 Bergisch Gladbach 2(DE)**

## Beschreibung

Die Erfindung richtet sich auf ein Kohleschleifstück für Bahnstromsbnehmer, insbesondere auf die konstruktive Gestaltung einer von der mechanischen Verbindung von Kohleleiste und Fassung getrennten elektrischen Verbindung zwischen Fassung und Kohleleiste.

In DIN 43 264 sind Kohleschleifstücke für Bahnstromabnehmer beschrieben, insbesondere Kohleleisten und Fassungen. Die Fassungsprofile 1-60 und 2-60 sind so ausgebildet, daß die Kohleleiste auf der Fassung aufliegt und am schwalbenschwanzförmigen Fuß von einem umgebogenen Randstreifen der Fassung umfaßt und mechanisch gehalten ist. Die Halterung der Kohleleiste erfolgt durch Schrauben, Nieten, Klemmen, Kleben oder Löten, wobei diese Verbindung auch die elektrische Verbindung zwischen der Kohleleiste und der Fassung herstellt.

Aus AT-PS 322 629 ist ein elektrisch hoch belastbares Kohleschleifstück bekannt, bei welchem die mechanische Verbindung zwischen der Kohleleiste und der Metallfassung mittels einer Klebschicht hergestellt ist, und die elektrische Überbrückung durch in die Klebschicht eingelagerte Metallteile erfolgt. Um den Stromübergang von der Kohleleiste durch die Klebstoffschicht zu verbessern, wird die Kohleleiste an der zu verklebenden Fläche mit einem metallischen Überzug versehen.

DE-AS 25 43 081 richtet sich auf die Verwendung von Klebfolien zum Befestigen von Kunstkohlekörpern am metallischen Träger von Schleifstücken für Bahnstromabnehmer.

Aus DE-OS 26 54 264 ist es bekannt, in derartige Klebfolien elektrisch leitende Kontaktstoffe einzubetten.

In DE-OS 27 18 759 ist beschrieben, zur Verbindung von Kohlekörpern mit dem Träger Kunstharzklebefilme zu verwenden, die zunächst in kaltem Zustand keine Klebwirkung besitzen. Die Aktivierung der Klebewirkung und das Aushärten der Harze erfolgt in der Regel durch Erwärmen. Die Aktivierung kann aber auch durch Einwirken von geeigneten Lösungsmitteln erfolgen.

Aus der DE-PS 69 78 08 ist eine Kohleschleifleiste mit einem galvanischen Metallüberzug an der dem Stromabnehmerbügel zugekehrten Seite für elektrische Bahnen bekannt. Die Kohleschleifleiste hat eine oder mehrere Aussparungen zur Aufnahme von den elektrischen Strom leitenden Anschlußlitzen. Die Litzen sind mit dem Kohleschleifstück durch Lötung zwischen zwei galvanisch aufgebrachten Metallschichten, insbesondere Kupferschichten verbunden. Die Aussparung (en) der Kohleschleifleiste hat eine Erweiterung zur Aufnahme einer Verankerung der Litze. Die seitlich aus der Schleifleiste herausgeführte freiliegende Litze hat jedoch den Nachteil, daß sie herausgerissen oder durch langandauernde Vibration durchgetrennt werden kann, so daß die elektrische Verbindung unterbrochen ist.

Aus der DE-B-1 257 825 ist eine Kohleschleifleiste bekannt an deren Unterseite ein Metallgewebeband zur Herstellung einen elektrischen Verbindung angeklebt ist.

Aufgabe der Erfindung ist es, eine konstruktive Gestaltung von Kohleschleifstücken für Bahnstromabnehmer zu schaffen, die einen sicheren, störungsfreien elektrischen Kontakt zwischen dem Metallträger und der Kohleleiste, unabhängig und getrennt von der mechanischen Verbindung der beiden Teile, ergibt.

Diese Aufgabe wird gelöst durch ein Schleifstück für Bahnstromabnehmer mit einer Kohleschleifleiste, die auf der Unterseite eine galvanisch aufgebrachte Metallschicht aufweist, und mit einer metallischen Fassung, wobei zur galvanischen, von der mechanischen Verbindung unabhängigen Verbindung der Kohlenleiste mit der Fassung an der Metallschicht eine flexible Anschlußleitung angelötet ist, dadurch gekennzeichnet, daß die flexible Anschlußleitung ein Metallgewebeband oder eine Metallfolie ist, die länger als die Kohleleiste und über die gesamte Länge oder annähernd die gesamte Länge der Kohleleiste angelötet ist, und daß das oder die überstehende (n) Ende (n) innerhalb der Fassung geführt und innenliegend mit der Fassung fest verbunden ist (sind).

Die Befestigung des Metallbandes in der Fassung zum Herstellen einer festen Verbindung kann sowohl an einem Ende der Fassung als auch an beiden Endbereichen erfolgen. Es ist aber auch eine Befestigung zwischen den Endbereichen innerhalb der Fassung möglich.

Das feste Verbinden durch Verschrauben, Vernieten, Verlöten oder Verschweißen kann unmittelbar mit der Fassung im Innenraum des Profiles erfolgen. Es kann jedoch auch ein Zwischenstück angeordnet werden, um die Kontaktflächen mit der Fassung zu vergrößern, wobei die Folie oder das Metallband dann am Zwischenstück befestigt sind.

Bevorzugte Ausführungsformen der Erfindung sind in den Unteransprüchen beschrieben.

Um die Fläche für den Stromübergang zu vergrößern, erstreckt sich das angelötete Metallgewebeband oder die Metallfolie über die gesamte oder annähernd die gesamte Länge der Kohleleiste.
Bei einer bevorzugten Ausführungsform weist die Kohleleiste, die einen beliebigen üblichen Querschnitt haben kann, im Fußbereich eine Ausnehmung auf, deren Querschnitt zur Aufnahme des Metallgewebebandes ausreicht. Breite und Tiefe der Ausnehmung richten sich nach der elektrischen Belastung. Vorzugsweise beträgt die Breite der Ausnehmung 1/4 bis 3/4 der Leistenbreite und die Tiefe 2 - 3 mm. Diese, meistens in der Mitte angeordnete Ausnehmung wird galvanisch verkupfert, und entsprechend den elektrischen Belastungen wird ein Metallgewebeband oder eine Metallfolie eingelötet, vorzugsweise aus Kupfer. Die länger als die Kohleleiste ausgebildete Metallkontaktfolie oder das Metallgewebeband wird vorzugsweise im Fassungsendbereich nach der Befestigung der Kohle auf der Fassung mit der Fassung, gegebenenfalls über ein Zwischenstück, verschraubt, vernietet, verlötet oder verschweißt. Die Befestigung der Kohleleiste auf dem Metallträger, der vorzugsweise aus Aluminium besteht, erfolgt durch eine Klebung mit einem dauerelastischen Kleber oder durch eine rein mechanische Klemmung.

Um einen elektrischen Überschlag im direkten Berührungsbereich der Fassung und der Kohleleiste zu erschweren, weist die Kohleleiste an der Qberfläche im Fußbereich seitlich und am Boden eine Isolierschicht zur Fassung hin auf. Die Isolierschicht kann eine isolierende Lackschicht, eine isolierende Klebefolie oder eine Isolierfolie sein. Zusätzlich kann nach dem Befestigen der Kohleleiste auf dem Träger noch eine isolierende Lackierung an der seitlichen Übergangsstelle vom Träger zur Kohleleiste aufgebracht werden.

Die Fassung besteht aus üblichen Metallen, die gegebenenfalls mit einer Korrosionsschutzschicht ausgerüstet sind.

Wenn die Fassung aus Aluminium besteht, erfolgt die mechanische Verbindung mit der Kohleleiste vorzugsweise durch Verkleben. Zur Verklebung der Fassung mit der Kohleleiste dienen dauerelastische Kleber, wobei sowohl kalt als auch warm aushärtende Klebstoffe verwendet werden können. Aufgrund der getrennten elektrischen Verbindung kann das Klebstoffsystem in erster Linie nach den Haftungseigenschaften, völlig unabhängig von den elektrischen Werten, ausgewählt werden. Zusätzlich kann im Fassungsendbereich das Fassungprofil mit einer Klebschicht abgedeckt werden, um den Innenraum der Fassung abzudichten und Korrosion zu verhindern.

Bei bestimmten Formen der Fassung ist eine Verklebung nicht erforderlich, sondern die Kohle wird allein durch die Klemmwirkung der Fassung gehalten. Auch in diesem Falle bietet die Abdekkung im Fassungsendbereich mit Klebschichten Vorteile.

Die erfindungsgemäße konstruktive Ausführungsform hat den Vorteil, daß ein großflächiger elektrischer Kontakt vorhanden ist. Außerdem besteht eine Anpassungsmöglichkeit des zur Stromübertragung erforderlichen Metallquerschnittes an den Bedarfsfall, ohne daß die mechanische Verbindung dadurch beeinfluß wird, so daß auch bei hoher elektrischer Belastung ein ausreichender Querschnitt zur Verfügung gestellt werden kann.

Die Erfindung wird nun anhand von Ausführungsbeispielen noch näher erläutert.

Figur 1 zeigt einen Endbereich des Schleifstükes im Längsschnitt von der Seite.

Figur 2 ist ein Querschnitt entlang der Linie a-b von Figur 1.

Figur 3 ist ein Querschnitt durch eine Kohleleiste.

Figur 4 (a-d) zeigt im Querschnitt verschiedene Ausbildungsformen des Schleifstückes bei Klebverbindung.

Figur 5 zeigt eine weitere Ausführungsform von Figur 3 im Querschnitt.

Figur 6 zeigt im Querschnitt eine Ausführungsform des Endstückes mit Verschraubung an der Stirnseite des Profils.

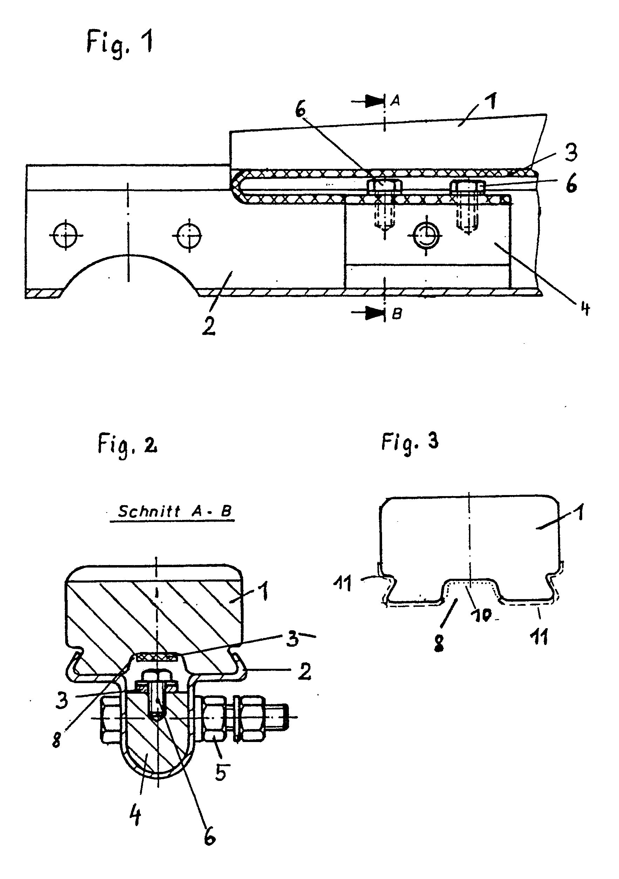

In Figur 1 ist die Fassung mit (2) bezeichnet. In die Fassung (2) von oben eingefügt ist die Kohleleiste (1), an deren Unterseite sich das festgelötete Metallgewebeband (3) befindet. Dieses Metallgewebeband (3) ist im Endbereich der Fassung (2) umgebogen und mittels Schrauben (6) an einem Zwischenstück (4) befestigt. Dadurch, daß an der Unterseite der Kohleleiste (1) eine galvanisch aufgebrachte Kupferschicht vorhanden ist, kann das Metallband (3) durch Löten vollflächig mit der Kohleleiste (1) verbunden werden. Die vollflächige Auflage des Metallgewebebandes (3) auf dem in der Fassung angeordneten Zwischenstück (4) und die Befestigung mittels der Schrauben (6) sichern eine feste elektrische Verbindung ohne mechanische Belastung bei Gebrauch, wie sie beispielsweise in CH-PS 210 950 vorhanden ist.

Figur 2 zeigt im Querschnitt entlang der Line A-B die Gestaltung des Schleifstückes im Endbereich. Die Kohleleiste (1) weist auf der Unterseite eine Ausnehmung (8) auf, deren Oberfläche galvanisch metallisiert ist. In die Ausnehmung eingelötet ist ein Metallgewebeband (3). Das umgelegte Metallband (3) ist mit dem in der Fassung (2) angeordneten Zwischenstück (4) mittels der Schrauben (6) verschraubt. Das Zwischenstück (4) wird durch die mit Muttern versehene Schraube (5) in dem Träger (2) fixiert. Gleichzeitig kann die Schraube (5) die elektrische Verbindung zum Panthographen herstellen.

Der in Figur 3 wiedergegebene Querschnitt einer Kohleleiste (1) zeigt in stark vergrößerter Form die im Fußbereich der Kohleleiste angeordnete Isolierschicht (11) und die in der Ausnehmung (8) vorhandene galvanisch aufgebrachte Metallschicht (10).

Die in Figuren 1 - 3 wiedergegebene Ausführungsform zeigt eine reine Klemmbefestigung der Kohleleiste (1) in einer entsprechend ausgebildeten Fassung (2).

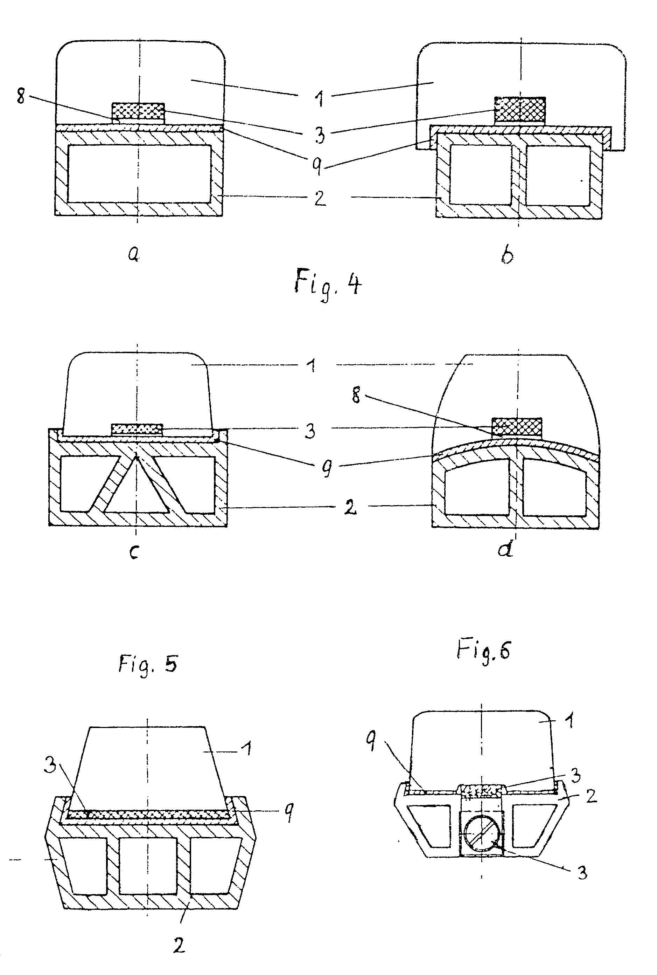

Figuren 4 und 5 zeigen andere Ausbildungsformen der Schleifleiste im Querschnitt. Die Fassung (2) kann einen rechteckigen Querschnitt (auf Figur 3 a), einen rechteckigen Querschnitt mit zwei oder drei Kammern (Figuren 3 b, c) oder einen rechteckigen Querschnitt mit einer abgerundeten Seite (Figur 3 d) haben. Die Kohleleiste (1) ist bei allen drei Querschnitten mittels der isolierenden Klebschicht (9) mit der Fassung (2) verbunden. In der Vertiefung (8) in der Kohleleiste (1) ist jeweils ein Metallgewebeband (3) eingelötet. Je nach Strombelastung weist das Metallgewebeband (3) einen unterschiedlichen Querschnitt auf. Es sind jedoch auch andere Querschnitte und andere Kammerzahlen möglich.

Figur 5 zeigt eine weitere möglich Querschnittsform. Die Fassung (2) besteht aus einem Mehrkammerprofil mit seitlich hochgezogenem Rand. Die Kohleleiste (1) ist mittels der isolierenden Klebstoffschicht mit der Fassung fest verbunden. Bei dieser Ausführungsform erstreckt sich eine Metallfolie (3) über die gesamte untere Fläche der Kohleleiste (1). Diese wird vorzugsweise im Endbereich in das Profil durch eine dafür vorgesehene Ausnehmung eingeführt.

Figur 6 zeigt im Querschnitt ein Ende der Schleifleiste mit einem Träger (2) in Form eines Dreikammerprofils. In einer Ausnehmung in der Kohleleiste (1) ist ein Gewebeband (3) eingelötet. Die Befestigung der Kohleleiste (1) an der Fassung erfolgt mittels der Klebschicht (9). Die Verschraubung und Befestigung des Metallbandes am Ende erfolgt an den Stirnseiten der Fassung (2), wobei das Metallband innerhalb des Profils angeordnet wird mittels der Schraube (3).

Entscheidend für alle Ausführungsformen der Erfindung ist, daß die an der Kohleleiste befestigte Litze oder Metallfolie innerhalb der Fassung geführt und darin bzw. am Ende innenliegend mit der Fassung fest verbunden ist, um einen festen elektrischen Kontakt, unabhängig von der mechanischen Verbindung zwischen der Kohleleiste und der Fassung, zu gewährleisten.

Bezugszeichenliste:

| 1 | Kohleleiste |
| 2 | Fassung |
| 3 | Metallgewebeband |
| 4 | Zwischenstück |
| 5 | Schraube mit Muttern |
| 6 | Schraube |
| 7 | |
| 8 | Ausnehmung in der Kohleleiste |
| 9 | Klebschicht, Klebung |
| 10 | galvanisch aufgebrachte Metallschicht |
| 11 | Isolierschicht |

## Ansprüche

1. Schleifstück für Bahnstromabnehmer mit einer Kohleschleifleiste (1), die auf der Unterseite eine galvanisch aufgebrachte Metallschicht (10) aufweist, und mit einer metallischen Fassung (2), wobei zur galvanischen, von der mechanischen Verbindung unabhängigen Verbindung der Kohlenleiste mit der Fassung an der Metallschicht (10) eine flexible Anschlußleitung angelötet ist, dadurch gekennzeichnet, daß die flexible Anschlußleitung ein Metallgewebeband (3) oder eine Metallfolie ist, die länger als die Kohleleiste ist und über die gesamte Länge oder annähernd die gesamte Länge der Kohleleiste an deren Unterseite angelötet ist, und daß das oder die überstehende(n) Ende(n) innerhalb der Fassung (2) geführt und innenliegend mit der Fassung fest verbunden ist (sind).

2. Schleifstück nach Anspruch 1, **dadurch gekennzeichnet,** daß die feste Verbindung zwischen dem Metallgewebeband oder der Metallfolie (3) und der Fassung (2) im Fassungsendbereich an einem oder beiden Enden der Fassung (2) angeordnet ist.

3. Schleifstück nach Ansprüchen 1 - 2, **dadurch gekennzeichnet,** daß die Kohleleiste (1) im Fußbereich eine Ausnehmung aufweist deren Querschnitt zur Aufnahme des Metallgewebebandes oder der Metallfolie (3) ausreicht und deren Oberfläche galvanisch verkupfert ist.

4. Schleifstück nach Ansprüchen 1 bis 3, **dadurch gekennzeichnet,** daß an der Oberfläche der Kohleleiste (1) im Fußbereich seitlich und am Boden eine Isolierschicht zur Fassung (2) vorhanden ist.

## Claims

1. Conductor shoe for a traction current pick-up with a carbon contact or bar (1) of which the lower side has a galvanically applied metal coating (10) and a metal holder (2), wherein, to enable the carbon bar to be galvanically connected to the holder independently of the mechanical connection, a flexible connector is soldered to the metal layer (10), characterised by the fact that the flexible connector comprises a braided wire strap 3 or a metal foil which is longer than the carbon bar (1) and which is connected to the lower side of the carbon bar over the entire length or approximately the entire length of the latter and that the projecting end(s) are positioned inside the holder (2) and is/are permanently connected internally with the holder.

2. Conductor shoe in accordance with Claim 1, characterised by the fact that the fixed connection between the braided wire strap or the metal foil (3) and the holder (2) is situated in the end zone of the holder, at one or both ends of the holder (2).

3. Conductor shoe in accordance with Claims 1 and 2, characterised by the fact that the carbon bar (1) is provided, in the foot zone, with a recess of which the cross section suffices to accommodate the braided wire strap or the metal foil (3) and of which the surface is galvanically copper-plated.

4. Conductor shoe in accordance with Claims 1 to 3, characterised by the fact that a layer insulating the holder (2) is provided on the surface of the carbon bar (1), in the foot zone to the side and on the base.

**Revendications**

1. Semelle d'archet pour pantographe comprenant une barre de carbone (1) qui comporte sur la face inférieure une couche métallique (10) appliquée galvaniquement, une monture métallique (2), un conducteur de raccordement flexible étant fixé par brasage, pour la liaison galvanique de la barre de carbone avec la monture indépendamment de la liaison mécanique, à la couche métallique (10), caractérisée en ce que le conducteur de raccordement flexible est une bande de tissu métallique (3) ou une feuille métallique plus longue que la barre de carbone (1) et soudée sur toute la longueur ou à peu près toute la longueur de la barre de carbone sur sa face intérieure, et en ce que l'extrémité ou les extrémités en saillie est ou sont guidée(s) à l'intérieur de la monture (2) et est ou sont reliée(s) rigidement intérieurement à la monture.

2. Semelle d'archet selon la revendication 1, caractérisée en ce que la liaison rigide entre la bande de tissu métallique ou la feuille métallique (3) et la monture (2) est disposée dans la zone extrême de la monture à l'une ou chacune des deux extrémités de la monture (2).

3. Semelle d'archet selon les revendications 1 et 2, caractérisée en ce que la barre de carbone (1) comporte dans la zone du pied un creux dont la section droite est suffisante pour recevoir la bande de tissu métallique ou la feuille métallique (3) et dont la surface est cuivrée galvaniquement.

4. Semelle d'archet selon les revendications 1 à 3, caractérisée en ce qu'une couche isolante pour la monture (2) est prévue à la surface de la barre de carbone (1) dans la zone du pied latéralement et inférieurement.

# Fig. 1

# Fig. 2

## Schnitt A - B

# Fig. 3

Fig. 4

Fig. 5

Fig. 6